# FASCICULE DE BREVET EUROPEEN

(11) **EP 0 964 225 B1**
(45) Date de publication et mention de la délivrance du brevet: **27.08.2003**
(21) Numéro de dépôt: 99401374.6
(22) Date de dépôt: 08.06.1999
(51) Int. Cl.: G01D 5/245

(54) **Capteur magnétique inductif avec index de référence**
Induktiver magnetischer Sensor mit Referenzindex
Inductive magnetic sensor with reference index

(30) Priorité: 09.06.1998 FR 9807251
(43) Date de publication de la demande: 15.12.1999
(73) Titulaire: CSEM Centre Suisse d'Electronique et de Microtechnique S.A., 2007 Neuchâtel (CH)
(72) Inventeur: De Coulon, Yves, 75116 Paris (FR)
(74) Mandataire: Colas, Jean-Pierre

(56) Documents cités:
- EP-A- 0 071 885
- EP-A- 0 805 339
- DE-A- 2 902 814
- FR-A- 2 526 953
- US-A- 4 528 471
- PATENT ABSTRACTS OF JAPAN vol. 015, no. 300 (P-1232), 30 juillet 1991 (1991-07-30) & JP 03 103716 A (OKUMA MACH WORKS LTD), 30 avril 1991 (1991-04-30)

## Description

L'invention concerne les capteurs magnétiques inductifs de position et/ou de mouvement et, plus particulièrement dans de tels capteurs, la partie appelée cible qui présente des repères prévus pour être détectés par le capteur associé, lorsque le capteur et la cible sont en mouvement relatif l'un par rapport à l'autre.

Dans le cas d'un capteur optique de position associé à une cible circulaire entraînée par un moteur, la périphérie de cette dernière est munie à intervalles réguliers de repères optiques détectables par le capteur, par exemple, des bandes opaques, des trous, des fentes, etc. Pour disposer d'une position de référence absolue, un repère supplémentaire, identifiable par rapport aux autres, est réalisé sur la cible. Ce repère supplémentaire, appelé index, peut par exemple être décalé radialement par rapport aux autres repères et être détecté à chaque tour de la cible à l'aide d'un deuxième capteur optique.

De même, dans les capteurs magnétiques inductifs associés à une cible pourvue de repères régulièrement espacés, un tel index peut être réalisé par un repère supplémentaire sur la cible, qui, dans le cas d'une cible circulaire, est décalé radialement par rapport aux autres repères et peut être détecté par un deuxième capteur inductif disposé en regard de cet index.

Dans les deux exemples de capteurs mentionnés ci-dessus, un index décalé radialement conduit à utiliser deux capteurs , ce qui augmente l'encombrement, la complexité et le coût de l'ensemble du dispositif.

Le but de l'invention est de réaliser un capteur magnétique inductif associé à une cible qui permet de détecter à la fois les repères réguliers de la cible et l'index.

Ce but est atteint en modifiant la position, les dimensions ou le matériau de l'un des repères par rapport aux autres, de manière à modifier l'amplitude du signal électrique qu'il produit dans le capteur de sorte qu'il puisse être détecté par une comparaison d'amplitude avec les signaux fournis par les autres repères.

L'invention concerne donc un capteur magnétique inductif du type comportant un enroulement primaire, alimenté par un courant alternatif à haute fréquence fourni par un dispositif d'excitation, et au moins deux enroulements secondaires connectés en montage différentiel, soumis au champ magnétique créé par l'enroulement primaire et fournissant des signaux électriques qui sont représentatifs des variations du champ magnétique dues à la présence d'une cible en mouvement relatif présentant une pluralité de discontinuités constituant autant de repères, lesdits signaux électriques étant appliqués à un circuit d'amplification/démodulation suivi d'un circuit de traitement des signaux démodulés, caractérisé en ce que :
- les propriétés dimensionnelles et/ou magnétiques de l'un, au moins, des repères sont modifiées de manière à modifier l'amplitude du signal électrique fourni par le couple d'enroulements secondaires lors du passage de ce repère modifié (ou index) et;
- le circuit de traitement des signaux démodulés comprend des moyens pour détecter le signal correspondant au passage de l'index.

D'autres caractéristiques et avantages de la présente invention apparaîtront à la lecture de la description suivante d'exemples de réalisation particuliers, ladite description étant faite en relation avec les dessins joints dans lesquels :
- la figure 1 est un schéma d'un capteur magnétique inductif associe à un disque support de repères avec index selon l'invention;
- la figure 2 est une vue en coupe de la cible de la figure 1 au niveau de l'index;
- la figure 3 est un diagramme des signaux électriques fournis par le capteur magnétique de la figure 1 lors du passage des repères;
- la figure 4 est un schéma fonctionnel du dispositif de traitement des signaux fournis par le capteur;
- la figure 5 montre une variante selon laquelle la cible est constituée par un disque double.

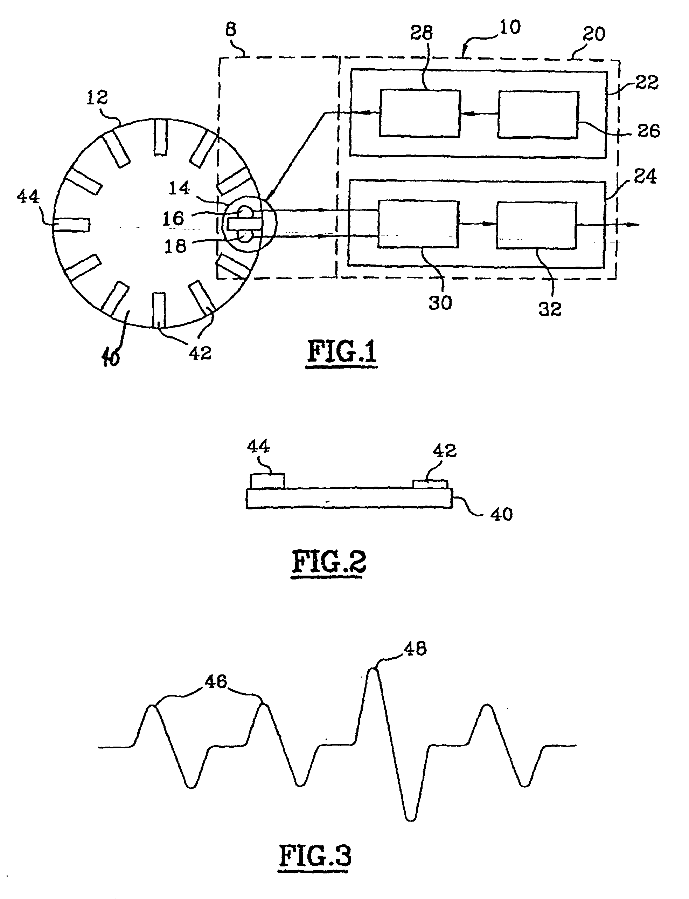

Le schéma de la figure 1 montre un capteur magnétique inductif d'un type connu, associé à une cible munie de repères régulièrement espacés. Un tel capteur magnétique inductif est par exemple décrit en détail dans les demandes de brevet Européen N0. EP 97 106 884, et N0. EP 98 400 835.9, déposées les 25 avril 1997 et 7 avril 1998, respectivement.

Différents types de cible peuvent être associés aux capteurs magnétiques inductifs, tels que décrits dans les documents précités. Il peut ainsi s'agir d'une cible en un premier matériau diélectrique sur lequel sont régulièrement disposés des repères en un matériau métallique ou ferromagnétique, d'une cible en un matériau métallique (ou ferromagnétique) dans laquelle des dents (ou fentes) ont été réalisées ou encore, d'une cible dans laquelle des zones métalliques alternent avec des zones ferromagnétiques. De plus, selon l'application envisagée, les cibles peuvent être circulaires ou linéaires. On retiendra que la caractéristique essentielle d'une cible associée à un capteur magnétique inductif de position et/ou de mouvement est de présenter, dans le sens du mouvement, des discontinuités qui modifient le champ vu par le capteur lors de leur passage devant ledit capteur. Dans la suite de la description, et sans que cela présente un caractère limitatif, il sera fait référence à une cible circulaire réalisée dans un matériau diélectrique et sur laquelle sont disposés des repères (ou discontinuités) réalisés à l'aide d'un matériau ferromagnétique.

Sur la figure 1, le capteur magnétique inductif 10 est associé à une cible 12. Le capteur magnétique inductif miniaturisé comprend, au moins, un enroulement primaire 14 parcouru par un courant alternatif à haute fréquence, de l'ordre, par exemple, de plusieurs centaines de kiloherz, qui engendre un champ magnétique alternatif, et au moins deux enroulements secondaires 16 et 18 soumis à ce champ alternatif, les enroulements primaire et secondaires pouvant être planaires. L'amplitude du champ magnétique reçu par chaque enroulement secondaire est modifié par le passage d'une discontinuité sur la cible, de telle sorte qu'en mesurant la modulation d'amplitude ou de phase des signaux électriques induits dans les enroulements secondaires, on détecte le passage de cette discontinuité. Cela permet, par un traitement adapté des signaux électriques, de déterminer la position de la discontinuité, ainsi que le sens et la vitesse du mouvement de la cible.

Les bornes de sortie de l'enroulement primaire 14 et des deux enroulements secondaires 16 et 18 sont connectées à un système électronique 20 qui comprend un dispositif électronique d'excitation 22 fournissant le courant alternatif à haute fréquence à l'enroulement primaire excitateur et un dispositif électronique 24 de traitement des signaux électriques apparaissant aux bornes de sortie des enroulements secondaires récepteurs 16 et 18.

Le dispositif électronique d'excitation 22 comprend essentiellement un oscillateur 26 dont le signal alternatif à haute fréquence est amplifié dans un amplificateur 28 avant d'être appliqué aux bornes de sortie de l'enroulement primaire 14.

Le dispositif électronique de traitement 24 comprend essentiellement :
- un circuit d'amplification/démodulation 30 pour le couple d'enroulements secondaires 16, 18 connectés en montage différentiel, et
- un circuit de traitement 32 des signaux démodulés.

La cible 12 est, par exemple, constituée d'un disque 40 en un matériau diélectrique, par exemple, du plastique, à la périphérie circulaire duquel sont disposés régulièrement des repères 42 en un matériau ferromagnétique. Ces repères 42, au nombre de 12, peuvent, par exemple, être réalisés par électrodéposition d'un alliage de Fer-Nickel sur une épaisseur de 0,02 mm. Comme mentionné précédemment, on comprendra que bien d'autres matériaux et différentes variantes de réalisation peuvent être utilisés pour la cible 12.

Selon l'invention, pour réaliser un index, l'un de ces repères 42, celui référencé 44, a ses propriétés qui sont modifiées par rapport aux autres repères de manière à influencer différemment les lignes du champ magnétique induit par l'enroulement primaire excitateur et ainsi modifier en amplitude le signal électrique fourni par les enroulements secondaires récepteurs.

Comme représenté à la figure 2, le repère 44 constituant l'index est plus épais (0,05 mm par exemple) que les autres repères, ce qui conduit à le rapprocher des enroulements du capteur et donc à augmenter le signal fourni par les enroulements secondaires lors du passage de cet index 44.

Le diagramme de la figure 3 donne l'allure des signaux fournis par les enroulements secondaires au passage des repères (signaux 46) et de l'index (signal 48). Le signal 48 a une plus grande amplitude que les autres et il peut être détecté par une comparaison avec un seuil S dans un comparateur 50 ou par une comparaison du signal délivré par le passage de l'index avec la valeur moyenne des signaux fournis par le passage des autres repères.

Ce seuil S peut avoir une valeur fixe qui est déterminée en fonction de la valeur maximale atteinte par les signaux 46 mais cela suppose que la différence d'amplitude entre les signaux 46 et 48 soit suffisamment grande pour permettre une détection sûre et aussi que leurs amplitudes ne varient pas au cours du temps, notamment, par suite de la variation de la distance capteur-cible.

Aussi, de préférence, l'invention propose d'effectuer un traitement des signaux 46 et 48 pour en déterminer la valeur moyenne au cours du temps, cette valeur moyenne servant alors à déterminer la valeur du seuil S, par exemple par un coefficient multiplicateur supérieur à l'unité.

L'adaptation de la valeur du seuil S à la valeur moyenne des signaux 46 et 48 permet de s'affranchir des variations d'amplitude des signaux dues à des causes diverses, notamment, le vieillissement du capteur et la variation de la distance.

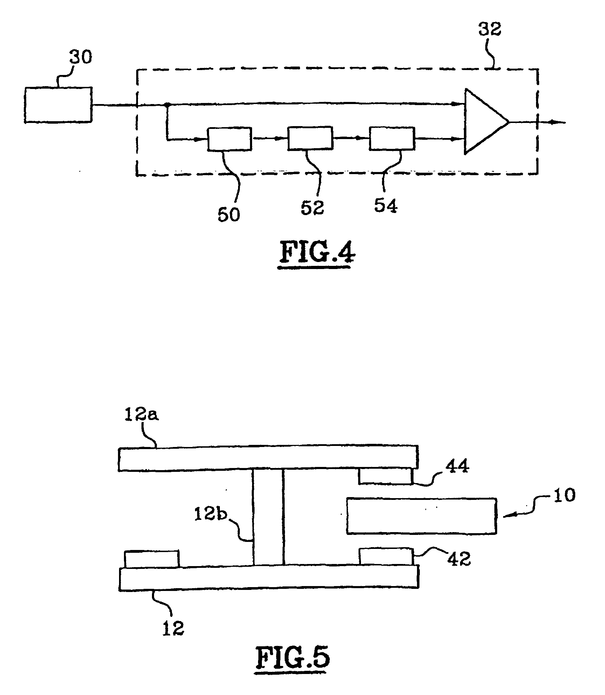

Le traitement des signaux 46 et 48 consiste par exemple à échantillonner la valeur du maximum avec une période donnée par l'inverse de la fréquence de passage des repères dans un circuit d'échantillonnage 50, à coder numériquement l'amplitude des échantillons dans un circuit de codage 52 et à calculer la valeur moyenne des échantillons à l'aide d'un circuit approprié, tel un microprocesseur 54 exécutant un programme déterminé (voir figure 4).

L'index de la figure 2 présente la particularité d'être sous la forme d'un repère ferromagnétique 44 de plus forte épaisseur que les autres 42.

A titre de variante, l'index 44 pourrait être de la même épaisseur que les repères 42 mais disposé sur une surélévation de manière à rapprocher la matière ferromagnétique des enroulements du capteur.

Le schéma de la figure 5 est une variante selon laquelle la surépaisseur de l'index est réalisée non pas sur le disque même de la cible portant les repères réguliers mais sur un deuxième disque couplé au premier de manière à être entraîné par celui-ci. C'est ainsi que le capteur 10 est disposé entre un premier disque 12 portant des repères réguliers 42 et un deuxième disque 12.a relié au premier par une liaison fixe et rigide 12.b et portant la surépaisseur 44, formant l'index avec le repère correspondant 42. Cet arrangement tire profit du fait que le capteur 10 est également influencé par le passage d'une discontinuité, que celle-ci soit dans un plan au-dessus ou en-dessous de celui des bobines réceptrices secondaires.

Dans la description précédente, l'index se distingue des autres repères, réalisés en un matériau ferromagnétique, par une hauteur plus grande. Il est clair, cependant, que la différenciation entre l'index et les repères réguliers peut être réalisée par d'autres variations de nature dimensionnelle, telle que: hauteur plus faible ou, encore, largeur plus ou moins grande de l'index. Dans ces derniers cas, si la réponse capteur au passage de l'index est plus faible que lors du passage des repères réguliers, le circuit de traitement doit être modifié en conséquence, (seuil variable ou fixe de détection de l'index inférieur au signal dû aux repères réguliers). Ces variations de nature dimensionnelle peuvent être faites sur tout type de cible, qu'elle soit métallique, ferromagnétique ou autre.

Selon encore d'autres variantes de l'invention, ce ne sont pas des variations de nature dimensionnelle qui sont opérées sur l'index mais des changements des propriétés magnétiques entre le matériau de l'index et celui des repères réguliers. En utilisant, pour l'index et pour les repères réguliers, des matériaux de perméabilité différente, la réponse du capteur est alors différente et permet la détection différenciée de l'index et des repères réguliers. Bien entendu peuvent être combinés sur une même cible, des variations de nature dimensionnelle et des changements de matériaux entre l'index et les repères réguliers.

## Revendications

1. Capteur magnétique inductif du type comportant un enroulement primaire (14), alimenté par un courant alternatif à haute fréquence fourni par un dispositif d'excitation (22), et au moins deux enroulements secondaires (16, 18) connectés en montage différentiel, soumis au champ magnétique créé par l'enroulement primaire (14) et fournissant des signaux électriques (46, 48) qui sont représentatifs des variations du champ magnétique dues à la présence d'une cible (12) en mouvement relatif présentant une pluralité de discontinuités (42) régulièrement espacées et constituant autant de repères, lesdits signaux électriques étant appliqués à un circuit d'amplification/démodulation (30) suivi d'un circuit de traitement (32) des signaux démodulés, **caractérisé en ce que** :
- les propriétés dimensionnelles et/ou magnétiques de l'un au moins (44) desdits repères (42) sont modifiées de manière à modifier l'amplitude du signal électrique (48), fourni par le couple d'enroulements secondaires (16, 18) lors du passage de ce repère modifié ou index (44), et
- le circuit de traitement (32) des signaux démodulés pour détecter le signal correspondant au passage de l'index (44) comprend un comparateur pour comparer l'amplitude des signaux, engendrés par le passage des repères (42) devant les enroulements secondaires (16,18), à une valeur de seuil (S).

2. Capteur selon la revendication 1, **caractérisé en ce que** ladite valeur de seuil (S) est fixe.

3. Capteur selon la revendication 1, **caractérisé en ce que** ladite valeur de seuil (S) est déterminée en fonction de l'amplitude moyenne des signaux engendrés par le passage desdits repères (42).

4. Capteur selon l'une des revendications 1 à 3, **caractérisé en ce que** ledit au moins un repère (44) a une hauteur différente de celle des autres repères (42).

5. Capteur selon la revendication. 4, **caractérisé en ce que** la différence de hauteur dudit au moins un repère (44) est obtenue par addition des hauteurs de deux repères disposés sur deux cibles couplées (12a, 12b) se déplaçant de part et d'autre du capteur.

6. Capteur selon l'une des revendications 1 à 3, **caractérisé en ce que** ledit au moins un repère (44) est réalisé en un matériau dont la perméabilité magnétique est différente de celle du matériau des autres repères (42).

## Patentansprüche

1. Induktiver Magnetaufnehmer der Bauart mit einer Primärwicklung (14), die von einem Wechselstrom hoher Frequenz gespeist ist, welcher von einer Erregervorrichtung (22) geliefert wird, und mindestens zwei Sekundärwicklungen (16, 18), die miteinander in Differentialanordnung verbunden und einem Magnetfeld ausgesetzt sind, welches durch die Primärwicklung (14) erzeugt ist, und elektrische Signale (46, 48) bereitstellt, die für Änderungen des Magnetfeldes aufgrund des Vorhandenseins einer Kollektorelektrode (12) repräsentativ sind, welche sich in Relativbewegung befindet und eine Vielzahl von in regelmäßigen Abständen angeordneten Unterbrechungen (42) aufweist, die Markierungen gleicher Anzahl wie diejenige der Unterbrechungen bilden, wobei die genannten elektrischen Signale an eine Verstärker/Demodulierungsschaltung (30) mit nachgeschaltetem Verarbeitungskreis (32) für die demodulierten Signale angelegt werden, **dadurch gekennzeichnet, daß**:
- die Dimensions- und/oder Magneteigenschaften mindestens einer (44) der Markierungen (42) so modifiziert werden, daß die Amplitude des elektrischen Signals (48) modifiziert wird, welches von dem Sekundärwicklungspaar (16, 18) beim Passieren dieser modifizierten Markierung bzw. dieses Index (44) geliefert wird, und
- der Verarbeitungskreis (32) der demodulierten Signale zum Detektieren des korrespondierenden Signals beim Passieren des Index (44) einen Vergleicher zum Vergleichen der Amplitude der Signale, welche beim Passieren der Markierungen vorbei an den Sekundärwicklungen (16, 18) erzeugt werden, mit einem Schwellwert (S) umfaßt.

2. Aufnehmer nach Anspruch 1, **dadurch gekennzeichnet, daß** der genannte Schwellwert (S) ein Festwert ist.

3. Aufnehmer nach Anspruch 1, **dadurch gekennzeichnet, daß** der genannte Schwellwert (S) als Funktion der mittleren Amplitude der durch Passieren der genannten Markierungen (42) erzeugten Signale definiert ist.

4. Aufnehmer nach einem der Ansprüche 1 bis 3, **dadurch gekennzeichnet, daß** mindestens eine Markierung (44) unterschiedliche Höhe im Vergleich zur Höhe der übrigen Markierungen (42) aufweist.

5. Aufnehmer nach Anspruch 4, **dadurch gekennzeichnet, daß** die Höhendifferenz der mindestens einen Markierung (44) durch Addition der Höhen von zwei Markierungen gewonnen wird, die auf zwei gekoppelten Kollektorelektroden (12a, 12b) angeordnet sind, welche sich beiderseits des Aufnehmers verlagern.

6. Aufnehmer nach einem der Ansprüche 1 bis 3, **dadurch gekennzeichnet, daß** mindestens eine Markierung (44) aus einem Material besteht, dessen magnetische Permeabilität verschieden von derjenigen des Materials der anderen Markierungen (42) ist.

## Claims

1. An inductive magnetic sensor of the type including a primary winding (14), powered by a high frequency alternating current provided by an energizing device (22), and at least two secondary windings (16, 18), connected as a differential circuit submitted to the magnetic field generated by the primary winding (14) and providing electrical signals (46, 48) which are representative of the magnetic field changes due to the presence of a target (12) in relative motion having a plurality of regularly spaced discontinuities (42) and forming as many marks, said electrical signals being applied to an amplification/demodulation circuit (30) followed by a circuit (32) for processing demodulated signals, **characterized in that**:
- the dimensional and/or magnetic properties of at least one (44) of said marks (42) are changed in order to change the amplitude of the electrical signal (48), provided by the pair of secondary windings (16, 18) upon the passing of this changed mark or index (44), and
- the processing circuit (32) for demodulated signals in order to detect the signal corresponding to the passing of the index (44), comprises a comparator for comparing the amplitude of the signals, generated by the passing of the marks (42) in front of the secondary windings (16, 18) at a threshold value (5).

2. Sensor according to claim 1, **characterized in that** said threshold value (5) is set.

3. Sensor according to claim 1, **characterized in that** said threshold value (5) is determined according to the average amplitude of the signals generated by the passing of said marks (42).

4. Sensor according to any of claims 1 to 3, **characterized in that** said at least one mark (44) has a different height from that of the other marks (42).

5. Sensor according to claim 4, **characterized in that** the height difference of said at least one mark (44) is obtained by adding the heights of two marks positioned on two coupled targets (12a, 12b) moving on either side of the sensor.

6. Sensor according to any of claims 1 to 3, **characterized in that** said at least one mark (44) is made out of a material, the magnetic permeability of which is different from that of the material of the other marks (42).
